# FASCICULE DE BREVET EUROPEEN

(11) **EP 2 153 128 B1**
(45) Date de publication et mention de la délivrance du brevet: **01.12.2010**
(21) Numéro de dépôt: 08805943.1
(22) Date de dépôt: 05.06.2008
(51) Int. Cl.: F23D 14/22, F23D 14/32, C03B 5/235

(54) **COMBUSTION DILUEE**
VERDÜNNTE VERBRENNUNG
DILUTED COMBUSTION

(30) Priorité: 08.06.2007 FR 0755580
(43) Date de publication de la demande: 17.02.2010
(73) Titulaire: SAINT-GOBAIN EMBALLAGE, 92400 Courbevoie (FR); Saint-Gobain Glass France, 92400 Courbevoie (FR)
(72) Inventeur: GALLEY, David, F-Paris 75017 (FR); GONCALVES-FERREIRA, Paula, F-Creteil 94000 (FR); PIERROT, Laurent, F-71100 Chalon-sur-Saône (FR)
(74) Mandataire: Colombier, Christian
(86) Numéro de dépôt international: PCT/FR2008/051007
(87) Numéro de publication internationale: WO 2008/152335

(56) Documents cités:
- EP-A- 0 343 746
- EP-A- 0 413 309
- EP-A1- 0 782 973
- FR-A1- 2 892 497
- US-A1- 2003 054 301
- US-B1- 6 331 107

## Description

L'invention concerne un procédé de combustion diluée générant peu d'oxyde d'azote applicable notamment dans les fours verriers.

L'homme du métier désigne généralement par « NOx » les émissions d'oxyde d'azote du type NO et/ou NO₂ provenant de l'oxydation indésirée d'azote. Une source importante d'azote est celui contenu dans le comburant tel que l'air ou l'air enrichi en oxygène.

La plupart des procédés de combustion, notamment ceux utilisés dans les fours de verrerie, sont confrontés à des problèmes d'émission non désirée de NOx dans les fumées de combustion. Les NOx ont une influence néfaste à la fois sur l'être humain et sur l'environnement. En effet, d'une part le NO₂ est un gaz irritant à la source de maladies respiratoires. D'autre part, au contact de l'atmosphère, ils peuvent former progressivement des pluies acides. Enfin, ils engendrent une pollution photochimique puisqu'en combinaison avec les composés organiques volatiles et le rayonnement solaire, les NOx sont à l'origine de la formation de l'ozone dite troposphérique dont l'augmentation de concentration à basse altitude devient nocive pour l'être humain, surtout en période de forte chaleur.

C'est pourquoi les normes en vigueur sur l'émission de NOx deviennent de plus en plus exigeantes. Du fait même de l'existence de ces normes, les fabricants et les exploitants de four tels que ceux des fours verriers se préoccupent de manière constante de limiter au maximum les émissions de NOx, de préférence à un taux inférieur à 800, voire inférieur à 600 mg par Nm³ de fumées.

La température est un paramètre influençant fortement la formation des NOx. Au-delà de 1300°C, l'émission des NOx croît de manière très importante.

La réduction des NOx peut être faite selon deux principes appelés méthodes primaires et méthodes secondaires. Les méthodes primaires consistent à empêcher la formation des NOx tandis que les méthodes secondaires visent à détruire les NOx après leur formation.

Une méthode secondaire pour réduire les NOx consiste à faire intervenir un agent réducteur sur les gaz émis afin que les NOx soient convertis en azote. Cet agent réducteur peut être de l'ammoniac mais cela induit des inconvénients tels que la difficulté de stocker et manipuler un tel produit. La présence de gaz réducteurs dans certaines parties du four telles que les régénérateurs peut de plus provoquer une corrosion accélérée des réfractaires de ces zones.

Compte tenu des limitations précédentes, les méthodes primaires sont préférables. Afin de limiter la formation des NOx au niveau de la flamme, on peut notamment chercher à réduire l'excès d'air de combustion. Il est également possible de chercher à limiter les pics de température en augmentant le volume du front de flamme pour réduire la température moyenne au sein de la flamme. Une telle solution est par exemple décrite dans les US6047565 et WO9802386. L'alimentation en combustible et l'alimentation en comburant s'effectuent toutes deux de manière à étaler dans le temps le contact combustible/comburant et/ou à augmenter le volume de ce contact en vue de réduire l'émission de NOx.

Le EP413309 enseigne que les NOx peuvent être réduits par les mesures conjointes suivantes :
- en écartant fortement les arrivées de comburant et de carburant l'une de l'autre, et ce à plus de 4 fois le diamètre d'arrivée du comburant,
- en injectant l'oxydant à forte vitesse, de 200 à 1070 pieds par seconde (soit entre 60 m/s et 326 m/s) et de préférence de 500 à 1070 pieds par seconde (soit entre 152 m/s et 326 m/s).

Les exemples de ce document ont été réalisés avec un comburant très riche en oxygène (50% d'oxygène). La réduction en NOx va de 17 à 43%. La figure montre des arrivées en comburant et en fuel par des tubes métalliques de même diamètre.

Le EP896189 prétend améliorer cette technique en préconisant :
- d'utiliser un comburant plus riche en oxygène que l'air,
- l'injection du comburant et du combustible à des vitesses entre mach 0,25 et 1. Les vitesses du son dans l'air et dans le méthane à température ambiante (T=25°C) sont respectivement 346 m/s et 450 m/s. La valeur 0,25 Mach correspond à une vitesse de 87 m/s pour l'air et 112 m/s pour le CH₄ à température ambiante. Quand la température augmente, ces vitesses augmentent avec la racine carrée de la température. Ce document préconise par ailleurs une vitesse de plus de 100 m/s pour le combustible et plus de 75 m/s pour le comburant.

Le document US-A-20030054301 enseigne un procédé de combustion comprenant une arrivée de comburant contenant 10% à 30% d'oxygène, une arrivée de combustible débouchant dans le four hors de l'arrivée de comburant et à une distance de celle-ci comprise entre 0,3 et 4 fois le diamètre équivalent de l'arrivée de comburant, le comburant débouchant dans le four avec une vitesse comprise entre 10 et 60 m/s. La section de l'arrivée de comburant est au plus égale à environ 44,2 cm².

Le document EP-A-0343746 enseigne un procédé pour le fonctionnement d'un four comportant un orifice d'alimentation d'air et un orifice d'alimentation de combustible a une certaine distance l'un de l'autre dans le four. Le conduit d'air a un diamètre de 200 mm, soit une section de 0,0314 m².

Les documents FR 2 892 497 A1 et EP 0 782 973 A1 divulguent un procédé de combustion pour un four dans lequel plusieurs arrivées de combustibles débouchant dans le four sont placées à une certaine distance en dessous d'une arrivée d'air.

La réduction des NOx repose sur le principe de la dilution des partenaires de réaction dans les fumées du laboratoire, conduisant à des températures de flamme plus faibles et plus homogènes. On parle parfois de combustion sans flamme, ce qui signifie simplement que la flamme n'est pas visible à l'oeil nu.

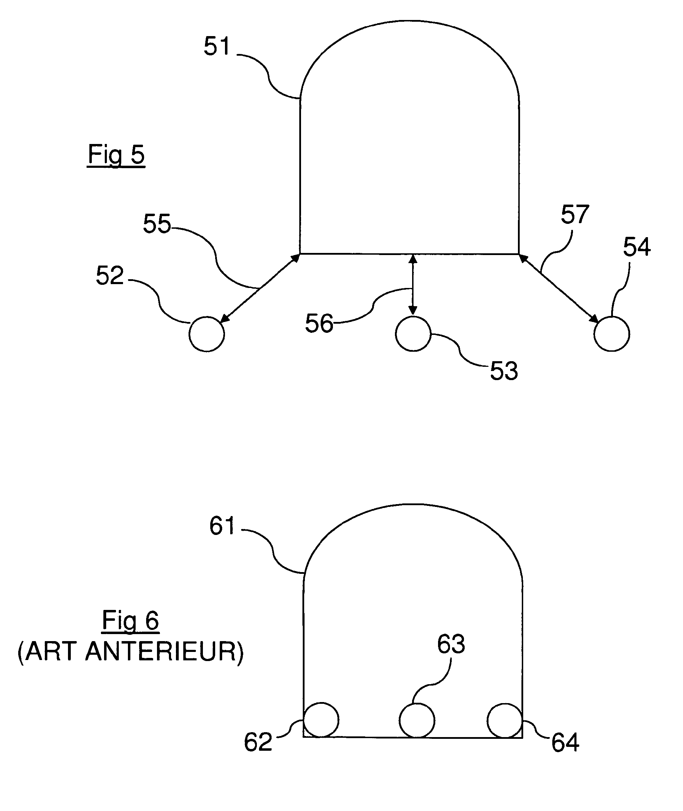

L'enseignement de ces documents est difficilement adaptable aux fours verriers fonctionnant à l'air ou à l'air modérément enrichi en oxygène car ces fours disposent d'arrivées de comburant aux sections importantes, pouvant notamment être comprises entre 0,5 et 3 m². Selon l'art antérieur, l'injecteur de carburant est toujours situé juste en-dessous ou à l'intérieur (souvent au bas) de l'arrivée de comburant, juste avant de déboucher dans le laboratoire du four. Notamment, la configuration caractéristique d'un brûleur de four verrier est celle de la figure 6. Les forts diamètres d'arrivées de comburant tiennent notamment aux raisons suivantes :
- de forts volumes gazeux (surtout si le comburant est de l'air) sont nécessaires et un gros diamètre limite les pertes de charge ;
- un faible diamètre se traduit par de fortes vitesses de gaz pouvant provoquer l'envol de matières vitrifiables en poudre surnageant en surface du bain de verre ; en effet, des matières vitrifiables surnageantes en poudre se trouvent en surface du verre au moins dans le premier tiers amont du four (en référence à la direction d'écoulement du verre) et même dans la moitié amont du four ; ces poudres entraînés par les gaz se répandent alors sur les parois et la voûte ou à l'intérieur des canalisations de récupération des fumées au lieu de participer à la fabrication du verre ; de plus, elles contiennent souvent des matières corrosives (oxyde d'alcalin, dérivé du bore, etc) qui vont réagir et endommager les surfaces sur lesquelles elles se seront déposées ; dans le cas de fours à récupérateur, les canalisations de récupération des fumées sont relativement étroites et les envols de poudres sont à proscrire pour éviter le bouchage de ces canalisations ;
- ces arrivées de comburant (généralement d'air) sont souvent en matériau réfractaire friable (notamment dans le cas des fours à régénérateurs : fours à brûleurs transversaux et fours à boucle) et sujets à une érosion d'autant plus forte que le débit gazeux est élevé. On ne souhaite pas que des particules de réfractaires viennent polluer le verre fondu ;
- ces arrivées d'air fonctionnent souvent alternativement en tant qu'arrivée d'air et en tant que collecteurs de fumées lorsque le four est du type à inversion et est équipé de régénérateurs ; un trop petit diamètre gêne la collecte des fumées, oblige à utiliser des ventilateurs d'aspiration plus forts, produit une accélération des gaz, ce qui génère de l'érosion des réfractaires, conduisant à plus de particules venant s'accumuler dans les régénérateurs.

Les régénérateurs, bien connus de l'homme du métier, servent à récupérer de la chaleur des fumées de combustion. Ils sont constitués de briques réfractaires placées dans des compartiments séparés fonctionnant alternativement. Ils peuvent équiper notamment les fours à boucle ou les fours à brûleurs transversaux. Ces fours sont généralement équipés d'au moins deux bruleurs fonctionnant l'un après l'autre et d'au moins deux régénérateurs fonctionnant l'un après l'autre pour chauffer le comburant et pour collecter les fumées. Pendant qu'un premier brûleur fonctionne et produit une flamme dont le comburant est amené et chauffé par un premier régénérateur situé près de lui, les fumées sont collectées et acheminées vers un deuxième régénérateur qui en récupère la chaleur. De manière cyclique, on inverse le fonctionnement, en arrêtant le fonctionnement du premier brûleur et en mettant en fonctionnement le deuxième brûleur dont le comburant est amené et chauffé par le deuxième régénérateur (qui lors de l'étape précédente servait de collecteur de fumées). Le premier régénérateur sert alors de collecteur de fumées. On fait donc fonctionner le four dans un sens jusqu'à l'obtention d'une température d'au moins 1250°C dans le régénérateur récupérant les fumées, puis l'on inverse le fonctionnement du four. L'usage de certaines céramiques permet même d'atteindre des températures supérieures à 1450°C, et même de l'ordre de 1500°C.

On rappelle qu'un récupérateur fonctionne sur le principe des échangeurs de chaleur, les fumées parcourant un conduit du récupérateur pendant que le comburant parcours un autre conduit du récupérateur. Les fumées transmettent leur chaleur au comburant à travers les parois de ces conduits. Le récupérateur ne fonctionne donc pas sur le principe de l'inversion comme le régénérateur.

Dans le cas d'un four à brûleurs transversaux, les régénérateurs sont généralement placés derrière les parois latérales du four. Dans le cas d'un four à boucle, ils sont généralement placés derrière la paroi amont du four.

Dans les fours verriers, du fait du fort diamètre de l'arrivée de comburant, il est généralement difficile d'écarter les arrivées de comburant et de combustible l'une de l'autre de plus de 4 fois le diamètre d'arrivée du comburant. De plus, comme déjà expliqué, de basses vitesses d'introduction du comburant dans l'atmosphère du four sont souhaitées.

Habituellement, dans un four verrier équipé d'arrivées d'air aussi grandes, l'injecteur de combustible est placé juste en-dessous ou à l'intérieur (généralement dans le bas) de l'arrivée de comburant elle-même.

Selon l'invention, on a maintenant découvert que des réductions de NOx extrêmement importantes, pouvant dépasser 45% et même dépasser 60%, pouvaient être obtenues dans le cas d'arrivées de comburant à forte section, généralement supérieures à 0,5 m², avec des vitesses d'arrivées de comburant relativement faibles. Cette nouvelle configuration permet en outre de conserver une bonne transmission de l'énergie thermique à la charge (matières vitrifiables et verre liquide).

L'invention concerne un procédé de combustion dans un four muni d'un brûleur comprenant une arrivée de comburant comprenant entre 10% et 30% d'oxygène et une arrivée de combustible débouchant dans le four hors de l'arrivée de comburant et à une distance de celle-ci comprise entre 0,3 et 4 fois le diamètre équivalent de l'arrivée de comburant, ledit comburant débouchant dans le four avec une vitesse comprise entre 10 et 60 m/s, la section de l'arrivée de comburant étant au moins égale à 0,25 m² et inférieure à 3 m².

L'invention procure une réduction des NOx très significative pour tout type de four mettant en jeu au moins un brûleur avec combustion de comburant et de combustible. L'invention est notamment applicable à tout type de four verrier comme les fours à boucle, les fours à brûleurs transversaux, à régénérateurs ou à récupérateur (unit-melter). Des réductions de NOx spectaculaires peuvent être obtenues dans le cas des fours à boucle.

La section d'arrivée du comburant dans le four est généralement au moins égale à 0,25 m² et même supérieure à 0,5 m² et même généralement supérieure à 0,8 m², et généralement inférieure à 3 m² et plus généralement inférieure à 2 m².

Dans le cadre de l'invention, le comburant est généralement chauffé avant d'entrer dans l'atmosphère du four, à une température d'au moins 400°C, voire d'au moins 1000°C. Les régénérateurs chauffent généralement l'air entre 1100 et 1400°C. Les récupérateurs chauffent généralement l'air entre 300°C et 900°C. De préférence, on chauffe le comburant à au moins la température d'auto-inflammation du combustible.

Le comburant est l'air ou l'air légèrement enrichi en oxygène de sorte que la teneur totale en oxygène dans le comburant est inférieure à 30% et même généralement inférieure à 25%. Cette teneur totale en oxygène dans le comburant est supérieure à 10%.

Selon l'invention, la vitesse d'entrée du comburant dans le four est supérieure à 10 m/s et préférentiellement supérieure à 15 m/s. Selon l'invention, la vitesse d'entrée du comburant dans le four est inférieure à 60 m/s et de préférence inférieure à 50 m/s, par exemple inférieure à 45 m/s.

Les arrivées de comburant et de combustible dans le four débouchent par des orifices différents dans le four (l'arrivée de comburant ne contient donc aucun injecteur de combustible) et sont séparées d'au moins 0,3 fois et de préférence au moins 0,5 fois, par exemple au moins 0,6 fois le diamètre équivalent de l'arrivée de comburant. Par diamètre équivalent, on entend le diamètre qu'aurait un cercle de même section que l'arrivée d'air. Cette définition est rendue nécessaire du fait que les arrivées d'air des fours verrier ne sont habituellement pas circulaires. Les arrivées de comburant et de combustible dans le four sont séparées de moins de 4 fois le diamètre équivalent de l'arrivée de comburant et de préférence de moins de 3 fois le diamètre équivalent de l'arrivée de comburant. En général, cette distance est d'au moins 20 cm et même d'au moins 50 cm et peut aller jusqu'à 4 m. Ces distances entre arrivées de combustible et de comburant sont celles entre les deux points les plus proches entre l'arrivée de combustible d'une part et l'arrivée de comburant d'autre part. Le terme brûleur désigne l'ensemble comprenant l'arrivée de comburant et la ou les arrivées de combustible associées pour entretenir une réaction de combustion. Si plusieurs injecteurs de combustible sont associés à une arrivée de comburant, l'ensemble des injecteurs se situent de manière à ce que la réaction de combustion s'initie sensiblement en même temps pour tous lesdits injecteurs.

Généralement, l'injecteur ou les injecteurs associés à une arrivée de comburant (c'est-à-dire participant à la même zone de réaction) se situe(nt) dans le même plan (même paroi) que ladite arrivée de comburant. Cependant, les arrivées de comburant et de combustible ne débouchent pas nécessairement sur la même paroi.

Dans le cas d'un combustible gazeux (tel que gaz naturel, le méthane, le butane, le propane), la vitesse d'entrée du combustible dans le four est supérieure à 30 m/s et préférentiellement supérieure à 50 m/s. Selon l'invention, la vitesse d'entrée du combustible dans le four est inférieure à 250 m/s et préférentiellement inférieure à 200 m/s.

L'utilisation d'un combustible liquide, tel que le fioul lourd est possible.
Les figures 1 et 2 représentent un four à boucle vu de dessus.
La figure 3 représente, vu de dessus, un four à brûleurs transversaux équipé d'un récupérateur.
La figure 4 représente, vu de dessus, un four à brûleurs transversaux équipé de régénérateurs.
La figure 5 représente une arrivée de comburant et de combustible formant un brûleur selon l'invention.
La figure 6 représente une arrivée de comburant et de combustible formant un brûleur selon l'art antérieur.

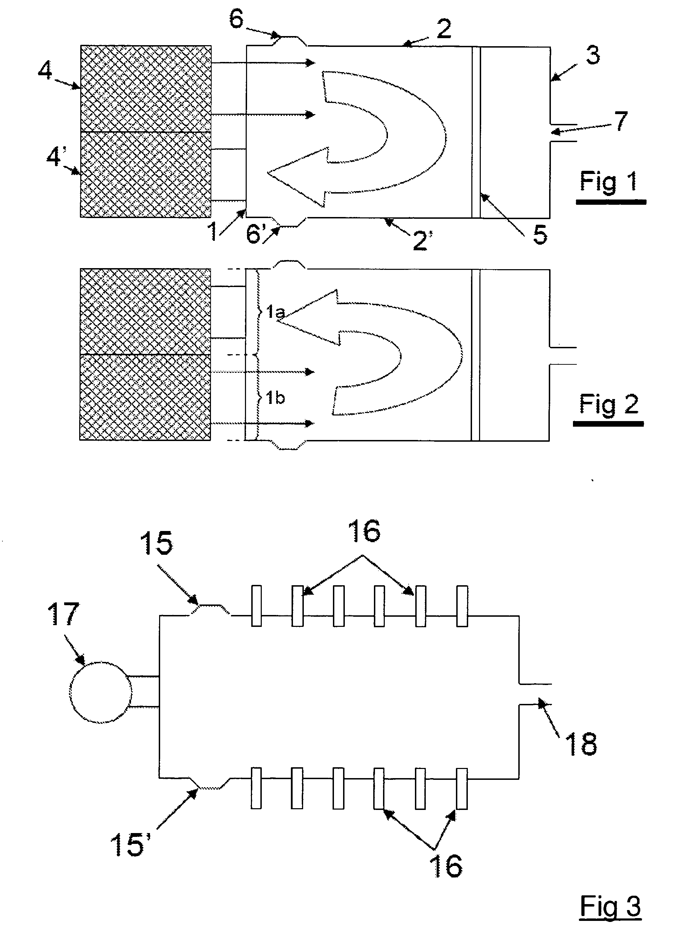

La figure 1 représente un four à boucle utilisable dans le cadre de la présente invention, vu de dessus. Ce four comprend une face amont 1, deux faces latérales 2 et 2' et une face aval 3. Il est muni de deux régénérateurs 4 et 4' identiques, juxtaposés et placés tous deux derrière la face amont. Chaque régénérateur est placé derrière une moitié de la face amont. Des niches 6 et 6' sont ménagées dans les parois latérales 2 et 2' pour l'introduction des matières vitrifiables. Ces niches sont placées dans le premier tiers amont des parois latérales. Un barrage 5 immergé dans le bain en fusion est prévu dans la moitié aval du four. Dans le cas de la figure 1, la flamme est issue d'une moitié 1a de la face amont. Elle forme une boucle dans l'atmosphère du four pour retourner vers l'autre moitié 1 b de la face amont. Les fumées traverseront alors le régénérateur 4' placé derrière la moitié 1b de la face amont. Lorsque les briques réfractaires dans le régénérateur 4' sont suffisamment chaudes, le fonctionnement du four est inversé selon la figure 2. Dans ce cas, la flamme est issue de la moitié 1b de la face amont et la chaleur des fumées est récupérée dans l'autre régénérateur 4. Le comburant de la flamme est de l'air réchauffé en traversant le régénérateur 4'. Le verre s'écoule à travers l'orifice 7 ménagé dans la face aval 3 du four. Les injecteurs de combustible ne sont pas représentés. Ils sont éloignés des arrivées d'air, conformément à l'invention.

La figure 3 représente un four à brûleurs transversaux vu de dessus. Les matières vitrifiables sont introduites par des niches 15 et 15' situées en amont dans les parois latérales. De nombreux brûleurs transversaux 16 équipent les parois latérales. La chaleur des fumées est récupérée par le récupérateur 17. Le verre est récupéré par la sortie 18. Rappelons qu'un récupérateur fonctionne sur le modèle d'un échangeur de chaleur, les fumées passant par un canal réchauffant de l'air passant par un autre canal et venant alimenter les brûleurs transversaux. Les injecteurs du combustible ne sont pas représentés. Ils sont éloignés des arrivées d'air, conformément à l'invention.

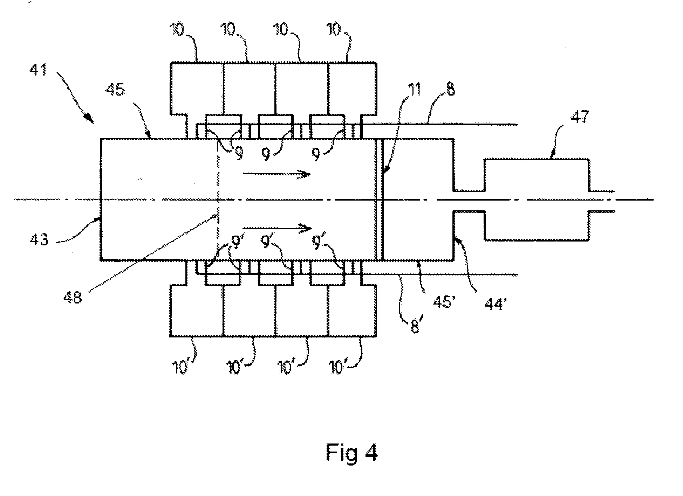

La figure 4 représente un four 41 à brûleurs transversaux et régénérateurs.
Le four 41 comprend une paroi amont 43, une paroi aval 44 et deux parois latérales 45 et 45'. Les matières vitrifiables sont introduites dès la paroi amont 43 par un dispositif habituel non représenté. Les matières vitrifiables fondues coulent de l'amont vers l'aval comme représenté par les flèches. Le verre passe dans une braise 47 à des fins de conditionnement thermique avant d'aller dans l'unité de transformation non représentée et pouvant être une installation de verre flotté pour la production de verre plat. Le four 41 est équipé au travers de ses deux parois latérales de deux rangées de quatre brûleurs aériens fonctionnant l'une après l'autre. Chaque brûleur aérien comprend un injecteur de combustible alimenté en gaz par les canalisations 8 et 8', et une arrivée d'air chaud 9 et 9'. On voit que les deux premiers brûleurs de chaque paroi latérale sont dans le premier tiers amont du four (la limite de ce premier tiers est indiquée par une ligne pointillée transversale 48). L'injecteur est situé en dessous de l'arrivée d'air, à distance suffisante conformément à l'invention. Les ouvertures 9 et 9' jouent alternativement le rôle d'arrivée d'air chaud et celui de collecteur de fumées. Elles sont reliées chacune à un régénérateur 10, 10'. Lorsque les injecteurs de la paroi 45 fonctionnent, ceux de la paroi 45' ne fonctionnent pas. Les fumées passent à travers les ouvertures 9' de la paroi latérale 45' en face d'eux et leur chaleur est récupérée dans les régénérateurs 10. Au bout de quelques dizaines de minutes, on inverse le fonctionnement du four, c'est-à-dire que l'on arrête le fonctionnement des brûleurs de la paroi 45 (arrêt de gaz combustible à travers la canalisation 8 et arrêt d'air à travers les ouvertures 9) et on met en route les brûleurs aériens de la paroi 45' en alimentant ses injecteurs en gaz par la canalisation 8' et en alimentant en air chaud les arrivées d'air 9'. L'air est chaud grâce au réchauffement par les régénérateurs 10. Au bout de quelques dizaines de minutes, on inverse encore le fonctionnement du four et ainsi de suite (répétition du cycle d'inversion). Le four est muni d'un barrage immergé 11 favorisant la formation de courroies de convection dans le verre fondu.

La figure 5 représente l'association d'une arrivée de comburant 51 et de trois injecteurs de combustible 52, 53, 54 selon l'invention, notamment utilisable en face amont d'un four à boucle (comme pour celui des figures 1 et 2). Les injecteurs sont hors de l'arrivée de comburant et les distance 55, 56, 57 entre les injecteurs et l'arrivée de comburant est comprise entre 0,3 et 0,5 fois le diamètre équivalent de l'arrivée d'air.

La figure 6 représente, selon l'art antérieur, une arrivée d'air 61 associée à trois injecteurs 62, 63, 64 situés à l'intérieur et au bas de l'arrivée d'air.

### Exemple 1

On a utilisé un four à brûleurs transversaux équipé de régénérateurs, du type de celui représenté sur la figure 3. Les conduits d'arrivée d'air, de section 0,25 m², sont disposés sur chacun des piédroits (parois latérales) du four, de telle sorte que l'écoulement principal de l'air soit perpendiculaire à l'écoulement de verre. Les conduits d'air sont groupés par paires de conduits en vis-à-vis. A chaque conduit d'arrivée d'air est associé deux injecteurs de combustible (gaz naturel), disposés à une distance égale à 1 fois le diamètre équivalent du conduit d'air associé. Les conduits de chacune des paires fonctionnent de façon cyclique. Au cours d'un cycle, l'air arrive par l'un des conduits, et le combustible par les injecteurs associés. Les fumées produites par la réaction de combustion sortent préférentiellement par le conduit qui lui fait face, et passent au travers d'un empilage de matériaux réfractaires, auxquelles elles cèdent une partie de leur énergie. Lors du cycle suivant, l'entrée d'air devient la sortie et réciproquement. L'air passe à travers l'empilage de réfractaires précédemment chauffés par les fumées, et se réchauffe à leur contact.

La température d'entrée de l'air dans le four est d'environ 1300°C, soit supérieure à la température d'auto-inflammation du combustible. La vitesse d'injection de l'air dans le four est d'environ 40 m/s. La vitesse d'injection du combustible est également d'environ 40 m/s.

Les émissions d'oxyde d'azote sont inférieures à 400 mg/Nm³.

### Exemple 2 (comparatif)

On procède comme pour l'exemple 1 sauf que la vitesse d'injection de l'air est réduite à 12 m/s par augmentation de la section d'arrivée d'air à 0,9 m² et sauf que la distance entre l'arrivée d'air et l'injecteur est réduite à 0,2 fois le diamètre équivalent du conduit d'air. On mesure des émissions d'oxyde d'azote proches de 800 mg/Nm³, ce qui indique que l'invention comme décrite dans l'exemple 1 a permis de réduire les émissions de NOx d'un facteur 2 par rapport à la configuration du présent exemple. Le transfert thermique à la charge (verre liquide et matières vitrifiables) est identique à celui constaté dans l'exemple 1.

### Exemple 3

On a utilisé un four à boucle équipé de régénérateurs, du type de celui représenté sur la figure 1. Les régénérateurs, au nombre de deux, sont placées derrière le pignon amont du four, qui jouxte les entrées de matière première et est opposé au coté par où sort le verre fondu. Sur cette paroi se trouvent les deux conduits qui fonctionnent en alternance, soit comme entrée de l'air préchauffé par le régénérateur soit comme sortie pour les fumées produites par la combustion. Comme les deux conduits se trouvent sur la même paroi ceci crée une flamme qui suit l'écoulement et a une forme de boucle caractéristique. Au cours du cycle suivant, les rôles sont échangés et la flamme est inversée: le conduit d'entrée de l'air devient le nouveau conduit de sortie des fumées, ce qui permet de transférer périodiquement la chaleur des fumées aux empilages des matériaux réfractaires du régénérateur et de préchauffer de cette manière l'air de combustion. La température d'entrée de l'air dans le four est d'environ 1300°C, supérieure à la température d'auto-inflammation du combustible. Le dimensionnement des conduits d'arrivée d'air est fait pour avoir des vitesses d'entrée de l'air dans le four de 25 m/s. A chaque conduit d'arrivée d'air sont associés 4 injecteurs de combustible qui se trouvent à une distance de 0,8 fois le diamètre équivalent du conduit d'air, pour deux de ces injecteurs, et à une distance de 1,6 fois le diamètre équivalent du conduit d'air, pour les deux autres injecteurs. Les gaz brûlés sont entraînés par le jet d'air et de combustible avant que la combustion n'ait lieu, de façon à produire une combustion très diluée. Les émissions de NOx sont de 200 mg/Nm3_{.}

### Exemple 4 (comparatif)

On procède comme pour l'exemple 3 sauf que le dimensionnement des conduits d'arrivée d'air est fait pour avoir des vitesses d'entrée d'air dans le four de l'ordre de 15 m/s et la distance entre l'arrivée d'air et les injecteurs est diminuée à 0,1 fois le diamètre équivalent de l'arrivée de comburant, les injecteurs se trouvant juste sous la veine d'air.

On mesure des émissions de NOx de 800 mg/Nm³, ce qui indique que l'invention comme décrite dans l'exemple 3 a permis de réduire les émissions de NOx de 75% par rapport à la configuration du présent exemple.

Le transfert thermique à la charge (verre liquide et matières vitrifiables) est identique à celui constaté dans l'exemple 3.

## Revendications

1. Procédé de combustion dans un four (41) muni d'un brûleur comprenant une arrivée de comburant (51) comprenant entre 10% et 30% d'oxygène et une arrivée de combustible (52, 53, 54) débouchant dans le four (41) hors de l'arrivée de comburant (51) et à une distance de celle-ci comprise entre 0,3 et 4 fois le diamètre équivalent de l'arrivée de comburant (51), ledit comburant débouchant dans le four (41) avec une vitesse comprise entre 10 et 60 m/s, la section de l'arrivée de comburant (51) étant au moins égale à 0,25 m² et inférieure à 3 m².

2. Procédé selon la revendication précédente, **caractérisé en ce que** la distance entre l'arrivée de comburant (51) et l'arrivée de combustible (52, 53, 54) est inférieure à 3 fois le diamètre équivalent de l'arrivée de comburant (51).

3. Procédé selon l'une des revendications précédentes, **caractérisé en ce que** la distance entre l'arrivée de comburant (51) et l'arrivée de combustible (52, 53, 54) est d'au moins 0,5 fois le diamètre équivalent de l'arrivée de comburant (51).

4. Procédé selon l'une des revendications précédentes, **caractérisé en ce que** la distance entre l'arrivée de comburant (51) et l'arrivée de combustible (52, 53, 54) est comprise entre 20 cm et 4 m.

5. Procédé selon l'une des revendications précédentes, **caractérisé en ce que** le comburant débouche dans le four (41) avec une vitesse supérieure à 15 m/s.

6. Procédé selon l'une des revendications précédentes, **caractérisé en ce que** le comburant débouche dans le four (41) avec une vitesse inférieure à 50 m/s.

7. Procédé selon l'une des revendications précédentes, **caractérisé en ce que** le comburant est chauffé à une température d'au moins 400°C avant d'entrer dans le four (41).

8. Procédé selon la revendication précédente, **caractérisé en ce que** le comburant est chauffé à une température d'au moins 1000°C avant d'entrer dans le four (41).

9. Procédé selon l'une des revendications précédentes, **caractérisé en ce que** le comburant est chauffé à au moins la température d'auto-inflammation du combustible avant d'entrer dans le four (41).

10. Procédé selon l'une des revendications précédentes, **caractérisé en ce que** la section de l'arrivée de comburant (51) est comprise entre 0,5 et 3 m²_{.}

11. Procédé selon la revendication précédente, **caractérisé en ce que** la section de l'arrivée de comburant (51) est comprise entre 0,8 et 3 m².

12. Procédé selon l'une des revendications précédentes, **caractérisé en ce que** le combustible est gazeux et **en ce que** sa vitesse d'entrée dans le four (41) est supérieure à 30 m/s.

13. Procédé selon la revendication précédente, **caractérisé en ce que** la vitesse d'entrée du combustible est supérieure à 50 m/s.

14. Procédé selon l'une des revendications précédentes, **caractérisé en ce que** le combustible est gazeux et **en ce que** sa vitesse d'entrée dans le four (41) est inférieure à 250 m/s.

15. Procédé de fusion de matières vitrifiables dans un four (41) dans lequel le verre fondu coule d'amont en aval, comprenant une alimentation (6, 6', 15, 15') en matières vitrifiables en poudre située dans la moitié amont du four (41), et un brûleur situé dans la moitié amont du four (41), ledit brûleur fonctionnant selon le procédé de combustion de l'une des revendications précédentes.

16. Procédé selon la revendication précédente, **caractérisé en ce que** des matières vitrifiables en poudre surnagent dans le premier tiers amont du four (41) et **en ce que** le brûleur est situé dans le premier tiers amont (48) du four (41).

17. Procédé selon l'une des deux revendications précédentes, **caractérisé en ce que** le four est un four à boude.

18. Procédé selon la revendication 15, **caractérisé en ce que** le four est un four à brûleurs transversaux.

## Claims

1. A method of combustion in a furnace (41) provided with a burner comprising an inlet for oxidizer (51) comprising between 10% and 30% of oxygen and an inlet for fuel (52,53,54) terminating in the furnace (41) outside the oxidizer inlet (51) and at a distance therefrom of between 0.3 and 4 times the equivalent diameter of the oxidizer inlet (51), said oxidizer entering the furnace (41) at a speed of between 10 and 60 m/s, the oxidizer inlet (51) cross-sectional area being at least equal to 0.25 m² and lower than 3 m².

2. The method as claimed in the preceding claim, **characterized in that** the distance between the oxidizer inlet (51) and the fuel inlet (52,53,54) is shorter than 3 times the equivalent diameter of the oxidizer inlet (51).

3. The method as claimed in one of the preceding claims, **characterized in that** the distance between the oxidizer inlet (51) and the fuel inlet (52,53,54) is at least 0.5 times the equivalent diameter of the oxidizer inlet (51).

4. The method as claimed in one of the preceding claims, **characterized in that** the distance between the oxidizer inlet (51) and the fuel inlet (52,53,54) is between 20 cm and 4 m.

5. The method as claimed in one of the preceding claims, **characterized in that** the oxidizer enters the furnace (41) at a speed higher than 15 m/s.

6. The method as claimed in one of the preceding claims, **characterized in that** the oxidizer enters the furnace (41) at a speed lower than 50 m/s.

7. The method as claimed in one of the preceding claims, **characterized in that** the oxidizer is heated to a temperature of at least 400°C before entering the furnace (41).

8. The method as claimed in the preceding claim, **characterized in that** the oxidizer is heated to a temperature of at least 1000°C before entering the furnace (41).

9. The method as claimed in one of the preceding claims, **characterized in that** the oxidizer is heated to at least the autoignition temperature of the fuel before entering the furnace (41).

10. The method as claimed in one of the preceding claims, **characterized in that** the oxidizer inlet (51) cross-sectional area is between 0.5 and 3 m².

11. The method as claimed in the preceding claim, **characterized in that** the oxidizer inlet (51) cross-sectional area is between 0.8 and 3 m².

12. The method as claimed in one of the preceding claims, **characterized in that** the fuel is a gas and **in that** its speed of entry into the furnace (41) is higher than 30 m/s.

13. The method as claimed in the preceding claim, **characterized in that** the speed of entry of the fuel is higher than 50 m/s.

14. The method as claimed in one of the preceding claims, **characterized in that** the fuel is a gas and **in that** its speed of entry into the furnace (41) is lower than 250 m/s.

15. A method for melting a glass batch in a furnace (41) in which the glass melt flows from upstream to downstream, comprising a powder batch feed (6,6',15,15') located in the upstream half of the furnace (41), and a burner located in the upstream half of the furnace (41), said burner operating by the combustion method of one of the preceding claims.

16. The method as claimed in the preceding claim, **characterized in that** the powder batch materials are supernatant in the upstream first third of the furnace (41) and **in that** the burner is located in the upstream first third (48) of the furnace (41).

17. The method as claimed in one of the two preceding claims, **characterized in that** the furnace is an end-fired furnace.

18. The method as claimed in claim 15, **characterized in that** the furnace is a cross-fired furnace.

## Patentansprüche

1. Verbrennungsverfahren in einem Ofen (41), der mit einem Brenner ausgerüstet ist, welcher einen Einlass (51) für ein Oxidationsmittel mit 10 % bis 30 % Sauerstoff sowie einen Brennstoffeinlass (52, 53, 54) umfasst, der außerhalb des Oxidationsmitteleinlasses (51) und in einem Abstand von diesem, der zwischen dem 0,3- und 4fachen des äquivalenten Durchmessers des Oxidationsmitteleinlasses (51) beträgt, in den Ofen (41) mündet, wobei das Oxidationsmittel mit einer Geschwindigkeit zwischen 10 und 60 m/s in den Ofen (41) mündet, wobei der Querschnitt des Oxidationsmitteleinlasses (51) wenigstens gleich 0,25 m² und kleiner als 3 m² ist.

2. Verfahren nach dem vorstehenden Anspruch, **dadurch gekennzeichnet, dass** der Abstand zwischen dem Oxidationsmitteleinlass (51) und dem Brennstoffeinlass (52, 53, 54) kleiner als das 3fache des äquivalenten Durchmessers des Oxidationsmitteleinlasses (51) ist.

3. Verfahren nach einem der vorstehenden Ansprüche, **dadurch gekennzeichnet, dass** der Abstand zwischen dem Oxidationsmitteleinlass (51) und dem Brennstoffeinlas (52, 53, 54) wenigstens das 0,5fache des äquivalenten Durchmessers des Oxidationsmitteleinlasses (51) beträgt.

4. Verfahren nach einem der vorstehenden Ansprüche, **dadurch gekennzeichnet, dass** der Abstand zwischen dem Oxidationsmitteleinlass (51) und dem Brennstoffeinlas (52, 53, 54) zwischen 20 cm und 4 m beträgt.

5. Verfahren nach einem der vorstehenden Ansprüche, **dadurch gekennzeichnet, dass** das Oxidationsmittel mit einer Geschwindigkeit von über 15 m/s in den Ofen (41) mündet.

6. Verfahren nach einem der vorstehenden Ansprüche, **dadurch gekennzeichnet, dass** das Oxidationsmittel mit einer Geschwindigkeit von unter 50 m/s in den Ofen (41) mündet.

7. Verfahren nach einem der vorstehenden Ansprüche, **dadurch gekennzeichnet, dass** das Oxidationsmittel vor Eintritt in den Ofen (41) auf eine Temperatur von wenigstens 400°C erhitzt wird.

8. Verfahren nach dem vorstehenden Anspruch, **dadurch gekennzeichnet, dass** das Oxidationsmittel vor Eintritt in den Ofen (41) auf eine Temperatur von wenigstens 1000°C erhitzt wird.

9. Verfahren nach einem der vorstehenden Ansprüche, **dadurch gekennzeichnet, dass** das Oxidationsmittel vor Eintritt in den Ofen (41) auf wenigstens die Selbstentzündungstemperatur des Brennstoffs erhitzt wird.

10. Verfahren nach einem der vorstehenden Ansprüche, **dadurch gekennzeichnet, dass** der Querschnitt des Oxidationsmitteleinlasses (51) zwischen 0,5 und 3 m² beträgt.

11. Verfahren nach dem vorstehenden Anspruch, **dadurch gekennzeichnet, dass** der Querschnitt des Oxidationsmitteleinlasses (51) zwischen 0,8 und 3 m² beträgt.

12. Verfahren nach einem der vorstehenden Ansprüche, **dadurch gekennzeichnet, dass** der Brennstoff gasförmig ist und dass seine Eintrittsgeschwindigkeit in den Ofen (41) über 30 m/s liegt.

13. Verfahren nach dem vorstehenden Anspruch, **dadurch gekennzeichnet, dass** die Eintrittsgeschwindigkeit des Brennstoffs über 50 m/s liegt.

14. Verfahren nach einem der vorstehenden Ansprüche, **dadurch gekennzeichnet, dass** der Brennstoff gasförmig ist und dass seine Eintrittsgeschwindigkeit in den Ofen (41) unter 250 m/s liegt.

15. Verfahren zum Schmelzen verglasbarer Materialien in einem Ofen (41), in dem das geschmolzene Glas von oben nach unten fließt, umfassend eine Zuführvorrichtung (6, 6`, 15, 15`) für pulverförmige verglasbare Materialien, die in der stromaufwärtigen Hälfte des Ofens (41) gelegen ist, sowie einen Brenner, der sich in der stromaufwärtigen Hälfte des Ofens (41) befindet, wobei der Brenner nach dem Verbrennungsverfahren von einem der vorstehenden Ansprüche arbeitet.

16. Verfahren nach dem vorstehenden Anspruch, **dadurch gekennzeichnet, dass** pulverförmige verglasbare Materialien in dem ersten stromaufwärtigen Drittel des Ofens (41) aufschwimmen und dass der Brenner sich in dem ersten stromaufwärtigen Drittel (48) des Ofens (41) befindet.

17. Verfahren nach einem der beiden vorstehenden Ansprüche, **dadurch gekennzeichnet, dass** der Ofen ein U-Flammenofen ist.

18. Verfahren nach Anspruch 15, **dadurch gekennzeichnet, dass** der Ofen ein Querflammenofen ist.
